# EUROPEAN PATENT SPECIFICATION

(11) **EP 3 450 087 B1**
(45) Date of publication and mention of the grant of the patent: **12.02.2020**
(21) Application number: 18191206.4
(22) Date of filing: 28.08.2018
(51) Int. Cl.: B23K 37/053, B23K 101/10, B23K 101/06

(54) **ANTI-DRIFT SYSTEM FOR ROLLER POSITIONERS**
GEGENDRIFTEINSTELLEINRICHTUNG FÜR AUFLAGERROLLEN
SYSTÈME ANTI-DÈRIVE POUR POSITIONNEURS À ROULEAUX

(30) Priority: 01.09.2017 IT 201700098514
(43) Date of publication of application: 06.03.2019
(73) Proprietor: A. Narducci S.p.A., 24040 Stezzano (BG) (IT)
(72) Inventor: NARDUCCI, Antonio, 24123 BERGAMO (IT)
(74) Representative: Gatti, Enrico

(56) References cited:
- DE-A1- 3 226 087
- GB-A- 2 035 873
- US-A- 3 480 158
- US-A1- 2010 244 347
- US-A1- 2011 109 030

## Description

The present invention relates to an anti-drift system for positioners capable of correcting the drift of a cylindrical body (see e.g., US 3 480 158 A).

In the carpentry and boiler manufacture field the presence of machines suitable for arranging the work-piece in the best position for performing welding operations and the like (grinding, cutting etc..) thereon, is well-established. Said machines are called "welding positioners" and are divided into two main categories.

The table positioners, characterized by a work-piece holding table, tiltable, rotating and possibly adjustable in its height from the ground, and the work-piece being clamped on this surface.

The roller positioners, which are machines used to support cylindrical bodies by means of elements each constituted by a crossbeam and by two work-piece support rollers. In said case, the only movement of the work-piece is a rotation in respect to its longitudinal axis.

With reference to the second category, namely that of the roller positioners, a reoccurring problem in their use is an undesired axial displacement of the work-piece in rotation. This movement is largely due to an imperfect positioning of the two (or more) roller support elements. If indeed these are not perfectly parallel to one another and/or if they are not aligned on their centre line, the result is a twisting of the work-piece resting on these roller positioners.

Although a correct placement of these machines allows to minimise the phenomenon described as "axial drift" of the work-piece, in the case of prolonged movements over time (with tens or hundreds of uninterrupted rotations of the work-piece in the same direction) and especially if very large and heavy work-pieces are involved, said phenomenon is substantially unavoidable.

A series of solutions exist, aimed at countering this phenomenon which will be described in the following.

The correction of the position in which the positioner is installed. This generates a constant and fixed reaction, which is not adjustable under load and difficult to implement even with no load.

The application of a front reaction roller that represents the simplest solution and, requires a careful sizing of the bearings so as to withstand the discontinuous and elevated thrusts, yet cannot always be applied and often hinders the machining to be carried out on the work-piece.

The installation of a steering roller that provides for the integration on the positioner idle element of a steering idle roller, namely rotating in respect to a vertical axis. This is a valid solution for mild drift phenomenon, yet inadequate at contrasting strong thrusts as it becomes very expensive in terms of motive power absorbed due to the grazing friction (due to the friction and transversal slide to the wheel).

The use of a single (or double) liftable roller, that represents a bulky and complex solution, difficulty in adjusting the correction, increased overall length with generation of thrusts concentrated on the structure of the machine and impossibility of transversal corrections in the positioning of the work-piece.

The use of oscillating idle rollers. This solution provides for keying the idle rollers onto a crankshaft with small misalignments but in counterphase. By making the crankshaft rotate by some degrees (+/-30°) a precession movement of the roller support axis is determined, with a consequent combined roto-translation motion of the axis itself. This entails a displacement of the centre line of the idle rollers centre-to-centre distance and, consequently, a work-piece twisting effect that can be adjusted in order to balance and compensate the drift originally generated by the work-piece in rotation. This solution is relatively cheap but, due to its nature, of small extent, as the solution struggles to contrast strong drift movements.

The use of translating rollers. Said solution provides for mounting the idle rollers on translating guides which allow them to move in phase, so as to change the positioning of the centreline of the idle rollers centre-to-centre distance. Consequently, a twisting effect of the work-piece is obtained that can be adjusted so as to balance and compensate the drift originally generated by the work-piece in rotation. Said solution enables elevated and efficient corrections, as well as a possible "absolute" correction of the rollers centre-to-centre distance thanks to the possibility of reducing or increasing corrections even under load. On the other hand, the solution is inherently expensive as it entails a large sizing of the linear actuators designed to carry out this correction: the linear actuators have to withstand the horizontal component of the thrusts on the rollers, as well as the grazing friction that stems from the contact between the roller support frame and the under-frame frame.

The aim of the present invention is to provide an anti-drift system for roller positioners capable of correcting the drift of the cylindrical body.

Another aim is to provide a system that is simple to implement.

Another further aim is to provide a system capable of neutralising horizontal thrusts generated by the loads on the rollers so as to reduce the sizing of the actuators typical of this solution.

According to the present invention said aims and others still are achieved by an anti-drift system according to claim 1.

Further characteristics of the invention are described in the dependant claims.

The characteristics and advantages of the present invention will become clearer from the detailed following description of a practical embodiment thereof, illustrated by way of non-limiting example in the attached drawings, wherein:

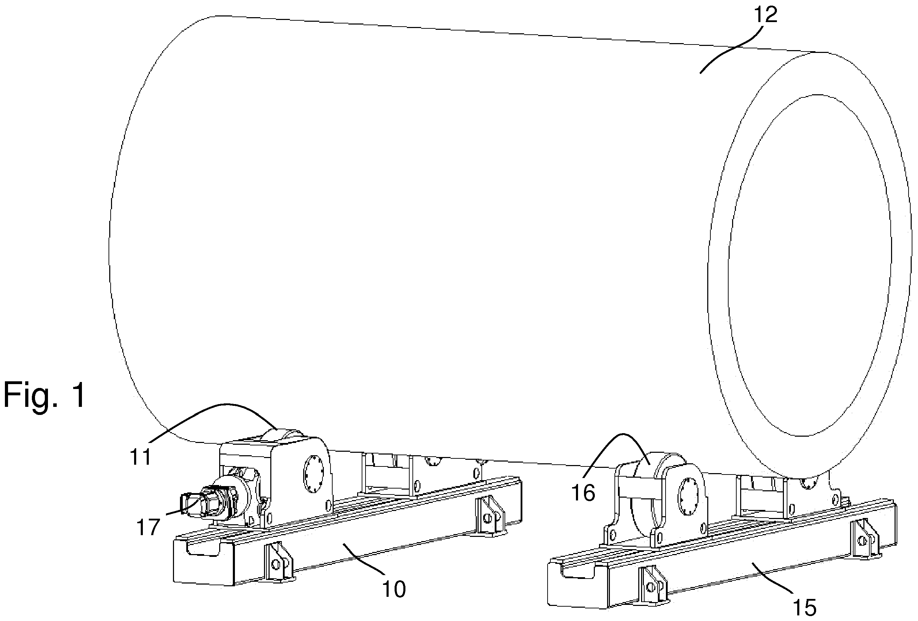

Figure 1 schematically shows an anti-drift system for roller positioners, according to the prior art.

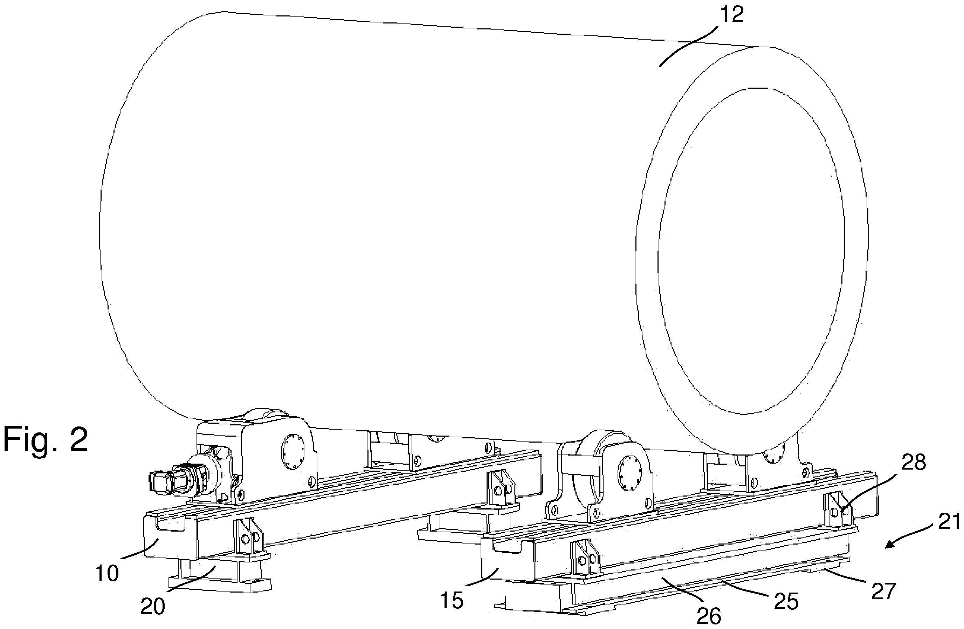

Figure 2 schematically shows, a perspective view of an anti-drift system for roller positioners according to the present invention;

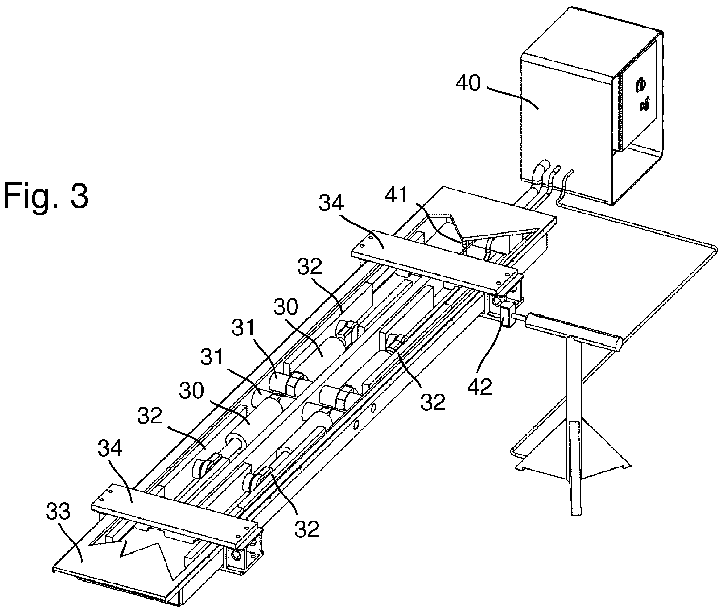

Figure 3 schematically shows, an exploded view of an under-frame of an anti-drift system for roller positioners according to the present invention;

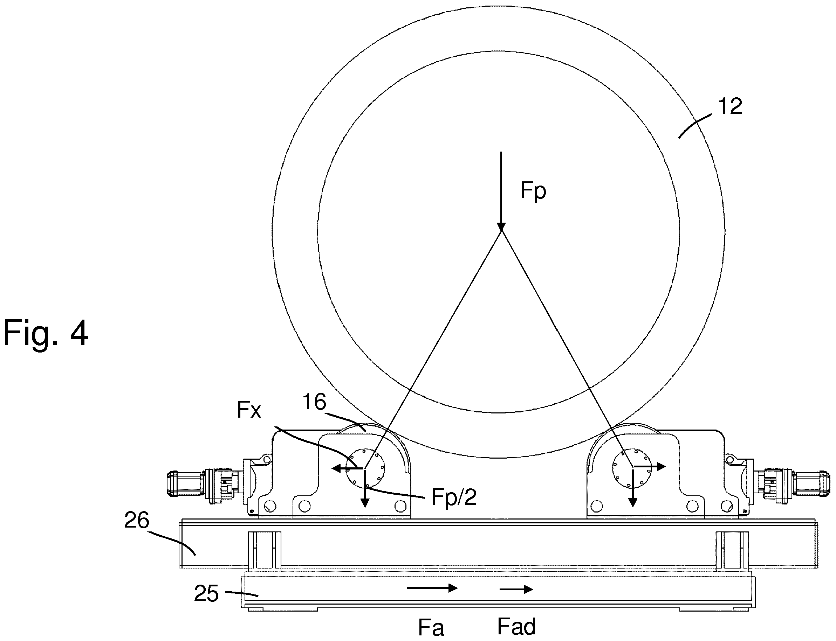

Figure 4 schematically shows, a front view of an anti-drift system for roller positioners according to the present invention.

With reference to the attached figures a roller positioner, according to the prior art, comprises a first crossbeam 10 or a first under-frame on which a pair of driving rollers 11 is mounted which are laterally spaced from each other and arranged to support and place a cylindrical body 12, typically a tube, into rotation around its longitudinal axis.

The positioner also comprises a second crossbeam 15 or a second under-frame on which a first pair of idle rollers 16 is mounted which are positioned laterally spaced from one another and arranged to support and place the cylindrical body 12 into rotation around its longitudinal axis.

The two crossbeams 10 and 15 are arranged at a distance from one another so that they can support the cylindrical body 12, and are fixed to the floor in a known manner.

The pair of driving rollers 11 are each connected to a driving motor 17 in a known manner.

According to the present invention an anti-drift system for roller positioners comprises, in addition to what has been previously described, a third crossbeam 20 for stably lifting the first crossbeam 10; and a fourth crossbeam 21 placeable below the second crossbeam 15.

The third crossbeam 20 can be made in enbloc or can be made in two pieces, as shown in the figures, provided that it can support the weight of the cylindrical body 12, and arrange the first crossbeam 10 at the same height as the second crossbeam 15.

The third crossbeam 20 and the fourth crossbeam 21 have the same height so that during assembly they maintain the stability needed to support the cylindrical body 12.

In this case, the third crossbeam 20 and the fourth crossbeam 21 are fixed to the floor, whereas the first crossbeam 10 and the second crossbeam 15 are respectively fixed to the third crossbeam 20 and the fourth crossbeam 21.

The fourth crossbeam 21 consists of a first lower part 25 to be fixed to the floor by means of appropriate flaps 27, and a second upper sliding part 26 to be fixed below the second crossbeam 15 by means of other flaps 28.

The first lower part 25 and the second upper part 26 slide on top of one another, along their longitudinal axis, in response to a command.

Preferably four actuator pistons 30 are placed inside the lower part 25, the pistons being fixed to transversal bars 31 which in turn are fixed to the lower part 25.

As actuator pistons 30, in the case of low load bearing capacity (up to 100 tons) electromechanical jacks can be used (even in a smaller number) or in the case of heavy load bearing capacity oleodynamic cylinders acting in parallel can be used.

The pistons 30 work opposite one another, two in traction and two in extension, for been able to carry out the movement of the upper part 26 in both directions.

The other end of the pistons 30 is fixed to sliding surfaces 32 which are fixed to the cover plate 33 and which correspond to the upper sliding part 26, on which the second crossbeam 15 is fixed.

The sliding surfaces 32 and the cover plate 33 can slide, in respect to the floor, thrusted or pulled by the pistons 30 along guides arranged for this purpose.

The sliding guides can be grazing or rolling guides according to the load bearing capacity of the positioner for which such an attachment is arranged. Roller guides can be used for small loads, and low friction sliding surfaces (synthesised and lubricated) for high load capacities (200 tons or more).

Preferably at least two transversal bars 34 are placed on the plates 33 for allowing them to fix, there through, the plate 33 to the second crossbeam 15 by means of flaps 28.

Therefore, the actuator pistons 30 allow the relative sliding in both directions of the second crossbeam 15 in respect of the fourth crossbeam 21 and consequently moving the rollers 16 so as to compensate the drift undergone by the cylindrical body 12.

The system comprises an electric control board and oleodynamic control unit 40 that controls the pistons 30; a position transducer 41 of the plates 33; and a position sensor 42 of the cylindrical body 12 facing the circumference thereof for checking possible axle displacements and/or their correction.

In an embodiment of the present invention the sensor 42 is a feeler arranged laterally to the cylindrical body 12 and preferably in proximity to an end thereof, for obtaining a greater sensitivity, that measures the displacement of the cylindrical body 12 in respect to its longitudinal axis (drift). The horizontal component Fx of the thrusts Fp induced by the cylindrical body 12, is withstood by the roller pair 16 and not by the electromechanical/oleodynamic actuators. The latter can be resized as they must exert a thrust equal to the grazing/rolling friction Fa induced by the sliding between the lower part 25 and the upper part 26 of the device which is increased by a percentage Fad necessary for the offsetting of the rotation axis of the work-piece.

The materials used, as well as the dimensions, can be of any type according to the needs and the prior art.

The anti-drift system for roller positioners thus conceived is susceptible to numerous variations and modifications, all falling within the scope of the invention as claimed;

## Claims

1. An anti-drift system for roller positioners for a cylindrical body (12) comprising: a first crossbeam (10) on which a pair of driving rollers (11) is mounted, being laterally spaced from each other; a second crossbeam (15) on which a pair of idle rollers (16) is mounted, being laterally spaced from each other; said pair of idle rollers (16) being axially spaced from said pair of driving rollers (11); said pair of driving rollers (11) being connected to a driving motor (17); a third cross beam (20) mountable under said first crossbeam (10); **characterised in that** it comprises: a fourth crossbeam (21) mountable under said second crossbeam (15); said fourth crossbeam (21) consisting of a lower part (25) fixable to the floor and by an upper part (26) fixable below said second crossbeam (15); said lower part (25) and said upper part (26) sliding on top of one another; said system comprises a sensor (42) designed to control the drift of said cylindrical body (12); a control centre that receives the values measured by said drift sensor (42) and, under-framed on these values, control the sliding of said upper part (26) in respect to said lower part (25).

2. The anti-drift system according to claim 1 **characterised in that** said first crossbeam (10) and said second crossbeam (15) are connectable to the floor.

3. The anti-drift system according to one of the preceding claims **characterised in that** said lower part (25) and said upper part (26) slide on top of one another by means of rolling sliding guides.

4. The anti-drift system according to one of the preceding claims **characterised in that** said lower part (25) and said upper part (26) on top of one another by means of sliding grazing guides.

5. The anti-drift system according to one of the preceding claims **characterised in that** said lower part (25) and said upper part (26) are moved by means of actuator pistons (30).

6. The anti-drift system according to claim 5 **characterised in that** said actuator pistons (30) comprise at least two actuator pistons (30) working one in traction and one extension.

7. The anti-drift system according to claim 5 **characterised in that** said upper part (26) comprises sliding surfaces (32); said lower part (25) comprises transversal bars (31); said actuator pistons (30) are fixed on one end to said transversal bars (31) and on the other end to said sliding surfaces (32); said sliding surfaces (32) are fixed to a cover plate (33); said second crossbeam (15) is fixed to said cover plate (33).

8. The anti-drift system according to one of the preceding claims **characterised in that** said lower part (25) and said upper part (26) slide on top of one another along their longitudinal axis.

## Patentansprüche

1. Ein Abweichungssteuersystem für Walzenstellungsregler für einen zylindrischen Körper (12), welcher Folgendes umfasst: einen ersten Querträger (10), auf den ein Paar Antriebsrollen (11) montiert IST, die seitlich jeweils im Abstand voneinander angeordnet sind; einen zweiten Querträger (15), auf den ein Paar Mitläuferwalzen (16) montiert ist, die seitlich jeweils im Abstand voneinander angeordnet sind, wobei das genannte Paar Mitläuferwalzen (16) jeweils im axialen Abstand von dem genannten Paar Antriebsrollen (11) angeordnet ist; das genannte Paar Antriebsrollen (11) mit einem Antriebsmotor (17) verbunden ist; einen dritten Querträger (20), welcher unter den genannten ersten Querträger (10) montiert werden kann; **dadurch gekennzeichnet, dass** es Folgendes umfasst: einen vierten Querträger (21), der unter den genannten zweiten Querträger (15) montiert werden kann, wobei der genannte vierte Querträger (21) jeweils aus einem unteren Teil (25) besteht, der am Boden befestigt werden kann, und der mit einem oberen Teil (26) unter dem genannten zweiten Querträger (15) befestigt werden kann; wobei der genannte untere Teil (25) und der genannte obere Teil (26) jeweils übereinander gleiten; und das genannte System einen Sensor (42) umfasst, der entwickelt wurde, um die Abweichung des genannten zylindrischen Körpers (12) zu kontrollieren; eine Steuerzentrale, welche die von dem genannten Abweichungssensor (42) gemessenen Werte empfängt und auf der Basis dieser Werte das Gleiten des genannten oberen Teils (26) in Bezug auf den genannten unteren Teil (25) steuert.

2. Das Abweichungssteuersystem gemäß Anspruch 1, **dadurch gekennzeichnet, dass** der genannte erste Querträger (10) und der genannte zweite Querträger (15) jeweils am Boden verankert werden können.

3. Das Abweichungssteuersystem gemäß einem der vorausgegangenen Ansprüche, **dadurch gekennzeichnet, dass** der genannte untere Teil (25) und der genannte obere Teil (26) jeweils mit Hilfe von rollenden Gleitführungen übereinander gleiten.

4. Das Abweichungssteuersystem gemäß einem der vorausgegangenen Ansprüche, **dadurch gekennzeichnet, dass** der genannte untere Teil (25) und der genannte obere Teil (26) jeweils mit Hilfe von gleitenden Streifführungen übereinander gleiten.

5. Das Abweichungssteuersystem gemäß einem der vorausgegangenen Ansprüche, **dadurch gekennzeichnet, dass** der genannte untere Teil (25) und der genannte obere Teil (26) mit Hilfe von Antriebskolben (30) bewegt werden.

6. Das Abweichungssteuersystem gemäß Anspruch 5, **dadurch gekennzeichnet, dass** die genannten Antriebskolben (30) mindestens zwei Antriebskolben (30) umfassen, von denen jeweils einer in Traktion und einer in Streckung arbeitet.

7. Das Abweichungssteuersystem gemäß Anspruch 5, **dadurch gekennzeichnet, dass** der genannte obere Teil (26) Gleitflächen (32) umfasst; der genannte untere Teil (25) Querstreben (31) umfasst; die genannten Antriebskolben (30) an einem Ende der genannten Querstreben (31) befestigt sind und an dem anderen Ende an den genannten Gleitflächen (32); die genannten Gleitflächen (32) an einer Deckplatte (33) befestigt sind; der genannte zweite Querträger (15) an der genannten Deckplatte (33) befestigt ist.

8. Das Abweichungssteuersystem gemäß einem der vorausgegangenen Ansprüche, **dadurch gekennzeichnet, dass** der genannte untere Teil (25) und der genannte obere Teil (26) jeweils an ihrer Längsache entlang übereinander gleiten.

## Revendications

1. Système anti-dérive pour positionneurs à rouleaux pour un corps cylindrique (12) comprenant: une première traverse (10) sur laquelle une paire de rouleaux d'entraînement (11) est montée, étant latéralement espacés l'un de l'autre; une deuxième traverse (15) sur laquelle une paire de rouleaux libres (16) est montée, étant latéralement espacés l'un de l'autre; ladite paire de rouleaux libres (16) étant espacée de manière axiale de ladite paire de rouleaux d'entraînement (11); ladite paire de rouleaux d'entraînement (11) étant reliée à un moteur d'entraînement (17); une troisième traverse (20) qui peut être montée sous ladite première traverse (10); **caractérisé en ce qu'**il comprend : une quatrième traverse (21) qui peut être montée sous ladite deuxième traverse (15); ladite quatrième traverse (21) consistant en une partie inférieure (25) qui peut être fixée au sol et en une partie supérieure (26) qui peut être fixée sous ladite deuxième traverse (15); ladite partie inférieure (25) et ladite partie supérieure (26) coulissant l'une sur l'autre; ledit système comprend un capteur (42) conçu pour contrôler la dérive dudit corps cylindrique (12); un centre de commande qui reçoit les valeurs mesurées par ledit capteur de dérive (42) et, sur la base de ces valeurs, contrôle le coulissement de ladite partie supérieure (26) par rapport à ladite partie inférieure (25).

2. Système anti-dérive selon la revendication 1 **caractérisé en ce que** ladite première traverse (10) et ladite deuxième traverse (15) peuvent être reliées au sol.

3. Système anti-dérive selon l'une des revendications précédentes **caractérisé en ce que** ladite partie inférieure (25) et ladite partie supérieure (26) coulissent l'une sur l'autre au moyen de guides de coulissement à roulement.

4. Système anti-dérive selon l'une des revendications précédentes **caractérisé en ce que** ladite partie inférieure (25) et ladite partie supérieure (26) coulissent l'une sur l'autre au moyen de guides de frottement à coulissement.

5. Système anti-dérive selon l'une des revendications précédentes **caractérisé en ce que** ladite partie inférieure (25) et ladite partie supérieure (26) sont déplacées au moyen de pistons d'actionneur (30).

6. Système anti-dérive selon la revendication 5 **caractérisé en ce que** lesdits pistons d'actionneur (30) comprennent au moins deux pistons d'actionneur (30) travaillant l'un en traction et l'un en extension.

7. Système anti-dérive selon la revendication 5 **caractérisé en ce que** ladite partie supérieure (26) comprend des surfaces de coulissement (32) ; ladite partie inférieure (25) comprend des barres transversales (31) ; lesdits pistons d'actionneur (30) sont fixés sur une extrémité auxdites barres transversales (31) et sur l'autre extrémité auxdites surfaces de coulissement (32); lesdites surfaces de coulissement (32) sont fixées à un couvercle (33); ladite deuxième traverse (15) est fixée audit couvercle (33).

8. Système anti-dérive selon l'une des revendications précédentes **caractérisé en ce que** ladite partie inférieure (25) et ladite partie supérieure (26) coulissent l'une sur l'autre le long de leurs axes longitudinaux.
